# EUROPEAN PATENT SPECIFICATION

(11) **EP 3 185 619 B1**
(45) Date of publication and mention of the grant of the patent: **09.12.2020**
(21) Application number: 16205283.1
(22) Date of filing: 20.12.2016
(51) Int. Cl.: H04W 48/20, H04W 8/18

(54) **METHOD AND DEVICE FOR CONNECTING TO NETWORK**
VERFAHREN UND VORRICHTUNG ZUR VERBINDUNG MIT EINEM NETZWERK
PROCÉDÉ ET DISPOSITIF DE CONNEXION À UN RÉSEAU

(30) Priority: 21.12.2015 CN 201510967435
(43) Date of publication of application: 28.06.2017
(73) Proprietor: Xiaomi Inc., Beijing 100085 (CN)
(72) Inventor: WANG, Yang, Beijing, 100085 (CN); FU, Qiang, Beijing, 100085 (CN); HOU, Enxing, Beijing, 100085 (CN)
(74) Representative: Steinbauer, Florian

(56) References cited:
- WO-A1-2015/085910
- CN-A- 104 780 154
- US-A1- 2012 039 326
- US-A1- 2013 081 113

## Description

### FIELD

The present invention relates to the communication technology field, and more particularly to a method and device for connecting to a network.

### BACKGROUND

With a rapid development of the Internet technology, more and more smart devices enter people's life, such as: a smart speaker box, a smart camera, and a smart cooker, etc. Generally, the smart devices may realize functions related to the intellectualization in the case of connecting to network.

Currently, for the smart device provided with a display screen, the process of accessing to the network is relatively simple. However, for the smart device without the display screen, the technical solution of accessing to the network is complex and inconvenient, and the success rate of accessing to the network is poor.

US 2013081113 A1 discloses methods and devices for configuring a wireless device, in which, the machine-to-machine (M2M) device may be remotely configurable by a particular access station (STA) to enable the M2M device to establish a communication link with a particular access point (AP). The M2M device may initially function as a second AP to acquire information from the particular STA, and then the M2M device may operate as a second STA to communicate, using the acquired information with the particular AP.

The method includes transmitting a message from a first device to a second device. The message includes first information associated with identification of the first device. The first information enables the second device to obtain access data. The method also includes establishing a first communication link between the first device and the second device based on the access data. The method further includes receiving, via the first communication link, second information associated with establishment of a second communication link between the first device and the third device. The method also includes configuring the first device to establish the second communication link between the first device and the third device based on the second information. US 2012/039326 A1 discloses that an authorization controller may send an authorization query to a mobile terminal, and in a manual authorization, a user response to an authorization query is required, thus the authorization controller receives an authorization assertion from the mobile terminal. This is implemented in a personal home network. The authorization controller and the mobile terminal are in one network, the personal home network.

### SUMMARY

In order to solve problems in the related art, the present invention provides a method and device for connecting to a network according to claim 1.

Advantageously, the method further includes:
obtaining the account information inputted by a user; and
sending the account information to the server, such that the server builds a binding relationship between the bound user account corresponding to the account information and the routing device after the server verifies the account information successfully.

According to a second aspect of the present invention, a device for connecting to a network according to claim 3 is provided.

Advantageously, the device may further include:
an account obtaining module, configured to obtain the account information inputted by a user; and
an account binding module, configured to send the account information obtained by the account obtaining module to the server, such that the server builds a binding relationship between the bound user account corresponding to the account information and the routing device after the server verifies the account information successfully.

According to a third aspect of the present invention, a computer program is provided, having an instruction, when the instruction is executed by a processor of a routing device, performing a method according to the invention.

According to a fourth aspect of the present invention, a non-temporary computer readable storage medium is provided, having stored thereon a computer program according to the invention.

The technical solution provided in the embodiments of the present invention may include following beneficial effects: the routing device in the present invention may send the network access request carrying the device information to the terminal device after receiving the device information sent by the smart device when the smart device is not connected to the network, and send the connection information for accessing to network to the smart device after receiving the result indicating that the network is allowed to be accessed returned by the terminal device, such that the smart device may access to the network; in the entire process, the user may perform a network connection confirmation on the smart device via the terminal device without operating the smart device, which may be realized conveniently with good maneuverability, meanwhile, a geographical restriction may be overcome, and a remote control on the network connection of the smart device may be realized.

In the present invention, the smart device may broadcast the device information of itself periodically under a condition that it is not connected to the network, so as to obtain the connection information of the routing device and to access to the network. During the entire process, the user does not need to operate the smart device, which is convenient to realize, such that the user experience is good.

It should be understood that, the above general description and following detail description are exemplary and explanatory, and shall not be construed to limit the present invention.

### BRIEF DESCRIPTION OF THE DRAWINGS

These and other aspects and advantages of embodiments of the present invention will become apparent and more readily appreciated from the following descriptions made with reference to the drawings.
FIG. 1 shows a schematic diagram of an application scene of a network connection according to an example embodiment.
FIG. 2 shows a flow chart of a method for connecting to a network according to an example embodiment.
FIG. 3 shows a flow chart of another method for connecting to a network according to an example embodiment.
FIG. 4 shows a flow chart of another method for connecting to a network according to an example embodiment.
FIG. 5 shows a block diagram of a device for connecting to a network according to an example embodiment.
FIG. 6 shows a block diagram of another device for connecting to a network according to an example embodiment.
FIG. 7 shows a block diagram of another device for connecting to a network according to an example embodiment.
FIG. 8 shows a block diagram of another device for connecting to a network according to an example embodiment.
FIG. 9 shows a block diagram of another device for connecting to a network according to an example embodiment.
FIG. 10 shows a block diagram suitable for a device for connecting to a network according to an example embodiment.

### DETAILED DESCRIPTION

Reference will be made in detail to embodiments of the present invention. The embodiments described herein with reference to drawings are explanatory, illustrative, and used to generally understand the present invention. The embodiments shall not be construed to limit the present invention. The same or similar elements and the elements having same or similar functions arc denoted by like reference numerals throughout the descriptions.

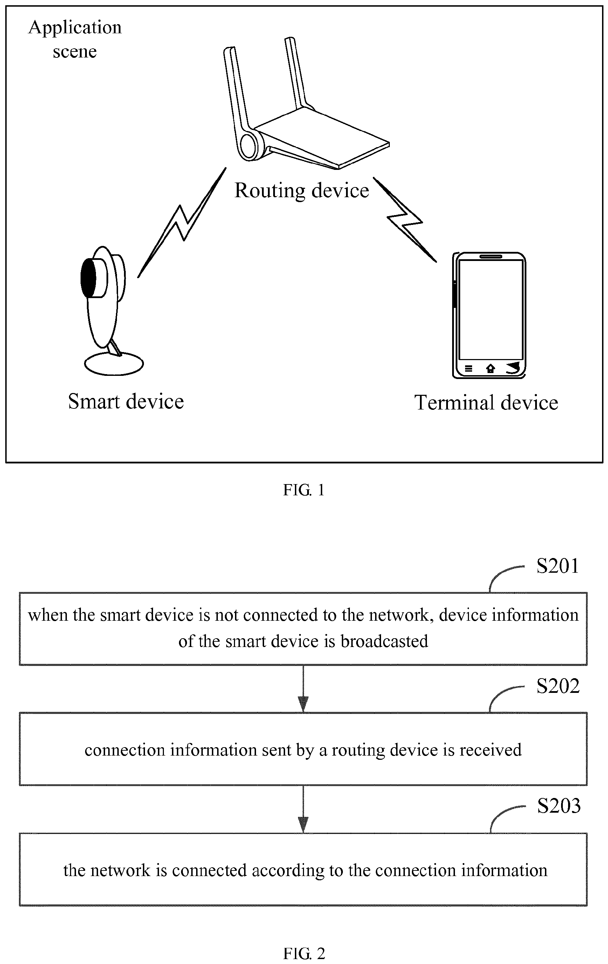

FIG. 1 shows a schematic diagram of an application scene of a network connection according to an example embodiment.

Referring to FIG. 1, smart devices may include various smart homes able to access to the network, such as a smart camera, a smart cooker and a smart speaker box. In the application scene shown in FIG. 1, take the smart device being the smart camera as an example.

A routing device may include a smart network device with a routing function, such as a smart router, a smart three-layer switch, etc..

A terminal device may include a device like a smart cellphone, a tablet computer, a PDA (Personal Digital Assistant), a PC or the like. The user may realize a management and control on the routing device via client software installed in the terminal device.

FIG. 2 shows a flow chart of a method for connecting to a network according to an example embodiment.

Referring to FIG. 2, the method may be used in the smart device shown in FIG. 1 and includes following steps.

In step S201, when the smart device is not connected to the network, device information of the smart device is broadcasted.

In step S202, connection information sent by a routing device is received.

In the present embodiment, the connection information is sent by the routing device after receiving a process result returned by the terminal device with regard to the network access request, in which the process result indicates that the network is allowed to be accessed, and the network access request is generated by the routing device and carries the device information.

In step S203, the network is connected according to the connection information.

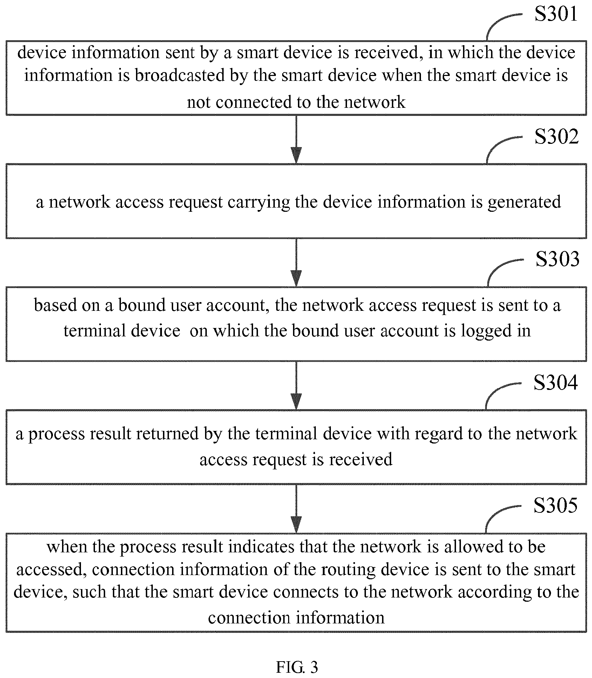

FIG. 3 shows a flow chart of another method for connecting to a network according to an example embodiment.

Referring to FIG. 3, the method may be used in the routing device shown in FIG. 1 and include following steps.

In step S301, device information sent by a smart device is received, in which the device information is broadcasted by the smart device when the smart device is not connected to the network.

In step S302, a network access request carrying the device information is generated.

In step S303, based on a bound user account, the network access request is sent to a terminal device on which the bound user account is logged in.

In step S304, a process result returned by the terminal device with regard to the network access request is received.

In step S305, when the process result indicates that the network is allowed to be accessed, connection information of the routing device is sent to the smart device, such that the smart device connects to the network according to the connection information.

According to the above description, in the present invention, the routing device may send the network access request carrying the device information to the terminal device after receiving the device information sent by the smart device when the smart device is not connected to the network, and send the connection information for access to network to the smart device after receiving the result indicating that the network is allowed to be accessed returned by the terminal device, such that the smart device may access to the network; in the entire process, the user may perform a network connection confirmation on the smart device via the terminal device without operating the smart device, which may be realized conveniently with good maneuverability, meanwhile, a geographical restriction may be overcome, and a remote control on the network connection of the smart device may be realized.

Advantageously, in an embodiment of the present invention, the device information may include a device name and device ID and other information used for recognizing smart devices. After being started, the smart device may detect whether it is able to connect to the network. Under a condition that it is able to connect to the network, e.g. related information required for the network connection are cached in the smart device, the subsequent schedule may end. Under a condition that it is unable to connect to the network, the smart device may periodically broadcast the device information of the smart device until it is able to access to the network. The period that the smart device sends the device information may be set by a developer, e.g. 1 minute, 3 minutes etc., which shall not be limited herein.

Advantageously, in another embodiment of the present invention, after the routing device which is in the same local area network with the smart device receives the device information sent by the smart device, the network access request carrying the device information may be generated, and then based on the bound user account, the network access request is sent to the terminal device on which the user account is logged in. In the present embodiment, the smart device may send the account information of the user account bound with the device and the network access request to a server, in which, the account information may include information used for recognizing the user account such as an account nickname, an account ID etc.. After receiving the account information and the network access request, the server may determine the terminal device on which the corresponding user account is logged in according to the account information, and then forward the network access request to the terminal device on which the user account is logged in. In the present embodiment, when there are multiple terminal devices on which the user account is logged in, the server may forward the network access request to each terminal device on which the user account is logged in. After the terminal device receives the network access request, the network access request may be displayed to the user, e.g. the terminal device may display "the smart camera *** request to access to the network, please confirm" etc. The user may input a process result indicating that the network is allowed or unallowed to be accessed according to actual situations, and the process result inputted by the user may be returned to the routing device by the terminal device.

Advantageously, in another embodiment of the present invention, the routing device receives the process result returned by the terminal device. When the process result indicates that it is refused to access to the network, the subsequent schedule may end. When the process result indicates that it is allowed to access to the network, the routing device may send the connection information of the present device to the smart device. The connection information may include: SSID (Service Set Identifier), connection password etc.. The routing device may broadcast the connection information, and may unicast the connection information, which shall not be limited in the present invention. After receiving the connection information, the smart device may connect to the network based on the connection information.

Advantageously, in another embodiment of the present invention, under a condition that the process result returned by the terminal device is not received in a preset time period, the routing device may send the network access request to the terminal device on which the user account is logged in again, for example, the account information of the bound user account and the network access request are sent to the server again, and the network access request is forwarded by the server to the terminal device on which the user account is logged in. Under a condition that the process result returned by the terminal device is still not received by the routing device after being re-sent for a preset number of times, the subsequent schedule may end.

Advantageously, in another embodiment of the present invention, the routing device may bind the user account to the routing device in a below way: the routing device may obtain the account information inputted by the user, and then send the account information to the server, such that the server builds a binding relationship between the user account corresponding to the account information and the routing device after the account information passes a verification. The account information may be inputted by the user in a login interface or a setting interface of the routing device, and may include: an account ID and an account password. For example, the user may input the account ID and the account password in the login interface of the routing device. After obtaining the account information, the routing device may send the account information to the server, and the server performs a verification on the account information. After the verification is passed, the server may build a binding relationship between the user account corresponding to the account information and the routing device. For example, the server may save a mapping relationship between the routing device and the account ID of the user account. Of course, in another embodiment of the present invention, other methods may be used for binding the user account to the routing device, which shall not be limited in the present invention.

An implementation process of the present invention is described below in combination with an application scene.

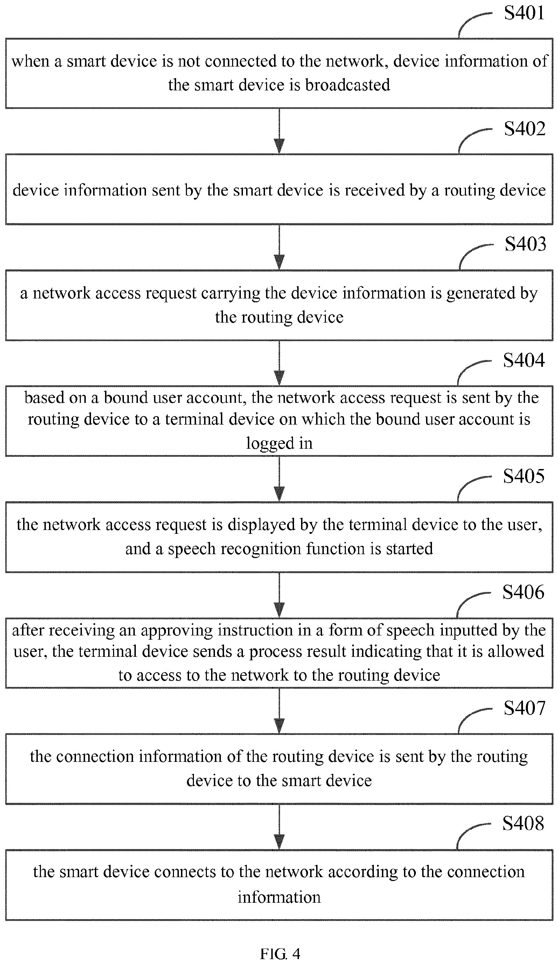

FIG. 4 shows a flow chart of another method for connecting to a network according to an example embodiment.

Referring to FIG. 4, the embodiment may be applied to the application scene shown in FIG. 1, and the method may include steps as follows.

In step S401, when a smart device is not connected to the network, device information of the smart device is broadcasted.

In the present embodiment, after being started, the smart device tries to access to the network, and when it is not able to access to the network, the smart device will broadcast the device information of the smart device.

In step S402, device information sent by the smart device is received by a routing device.

In the present embodiment, the routing device in the same local area network with the smart device receives the device information sent by the smart device.

In step S403, a network access request carrying the device information is generated by the routing device.

Based on the above step S402, after receiving the device information, the routing device may generate the network access request carrying the device information for the smart device.

In step S404, based on a bound user account, the network access request is sent by the routing device to a terminal device on which the bound user account is logged in.

In the present embodiment, the routing device may send the account information of the bound user account and the network access request to a server, and the network access request is forwarded by the server to the terminal device on which the user account is logged in according to the account information.

In step S405, the network access request is displayed by the terminal device to the user, and a speech recognition function is started.

In the present embodiment, after receiving the network access request, the terminal device may display the network access information to the user, and call a preset interface to start the speech recognition function.

In step S406, after receiving an approving instruction in a form of speech inputted by the user, the terminal device sends a process result indicating that it is allowed to access to the network to the routing device.

In the present embodiment, the user may input the process result with regard to the network access request in a form of speech, e.g. approving or refusing. When receiving an approving instruction in a form of speech inputted by the user, the terminal device may send a process result indicating that it is allowed to access to the network to the routing device.

For example, after displaying the network access request to the user by the terminal device, the user may speak "connect to the network" to a microphone of the terminal device directly; after obtaining the speech of "connect to the network", the terminal device determines that the speech is the approving instruction by recognition, and then the terminal device may send the process result indicating that the network is allowed to be accessed to the routing device.

In step S407, the connection information of the routing device is sent by the routing device to the smart device.

Based on the above step S406, after receiving the process result indicating that it is allowed to access to the network, the routing device may send the connection information of the routing device to the smart device, e.g. sending the SSID and an access password of the routing device to the smart device.

In step S408, the smart device connects to the network according to the connection information.

In the present embodiment, after receiving the connection information, the smart device may conncct to the network according to the connection information, and starts related work after accessing to the network successfully.

In the above embodiments, the smart device and the routing device may realize the above procedure by referring to the method for connecting to a network provided in the embodiments of FIG. 1 and FIG. 2, which shall not be elaborated herein.

Corresponding to the embodiments of the method for connecting to a network, embodiments of a device for connecting to a network are also provided in the present invention.

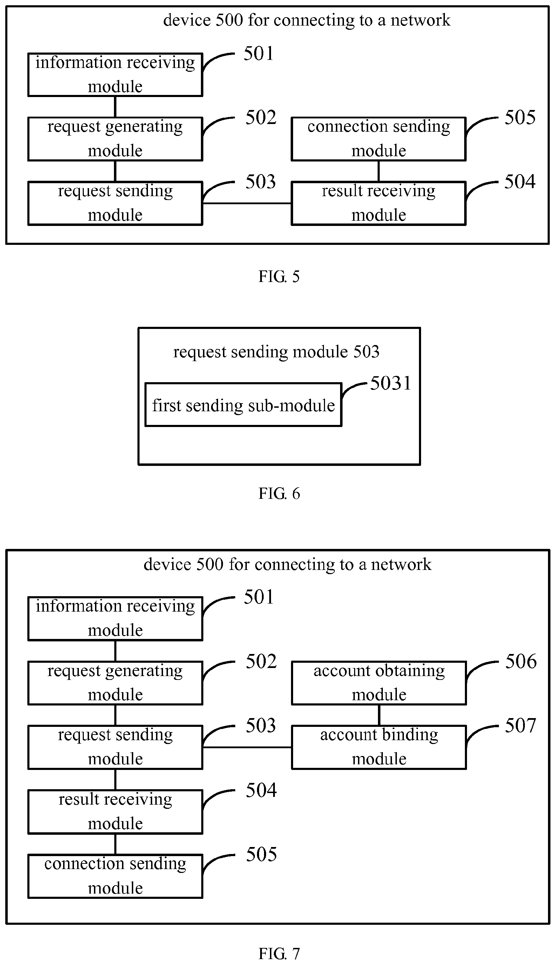

FIG. 5 shows a block diagram of a device for connecting to a network according to an example embodiment.

Referring to FIG. 5, a device 500 for connecting to a network may be used in a routing device, including: an information receiving module 501, a request generating module 502, a request sending module 503, a result receiving module 504 and a connection sending module 505.

The information receiving module 501 is configured to receive device information sent by a smart device, in which the device information is broadcasted by the smart device when the smart device is not connected to the network.

The request generating module 502 is configured to generate a network access request carrying the device information received by the information receiving module 501.

The request sending module 503 is configured to send the network access request generated by the request generating module 502 to a terminal device on which a bound user account is logged in based on the bound user account.

The result receiving module 504 is configured to receive a process result returned by the terminal device with regard to the network access request sent by the request sending module 503.

The connection sending module 505 is configured to send connection information of the routing device to the smart device when the process result received by the result receiving module 504 indicates that the network is allowed to be accessed, such that the smart device connects to the network according to the connection information.

In the above embodiments, the routing device may send the network access request carrying the device information to the terminal device after receiving the device information sent by the smart device when the smart device is not connected to the network, and send the connection information for accessing to network to the smart device after receiving the result indicating that it is allowed to access to the network returned by the terminal dcvicc, such that the smart device may access to the network; in the entire process, the user may perform a network connection confirmation on the smart device via the terminal device without operating the smart device, which may be realized conveniently with good maneuverability, meanwhile, a geographical restriction may be overcome, and a remote control on the network connection of the smart device may be realized.

FIG. 6 shows a block diagram of another device for connecting to a network according to an example embodiment.

Referring to FIG. 6, the embodiment is based on the embodiment shown in FIG. 5, and the request sending module 503 includes: a first sending sub-module 5031.

The first sending sub-module 5031 is configured to send account information of the bound user account and the network access request to a server, such that the server forwards the network access request to the terminal device on which the bound user account is logged in according to the account information.

FIG. 7 shows a block diagram of another device for connecting to a network according to an example embodiment.

Referring to FIG. 7, the embodiment is based on the embodiment shown in FIG. 6, and the device 500 for connecting to a network further includes: an account obtaining module 506 and an account binding module 507.

The account obtaining module 506 is configured to obtain the account information inputted by a user.

The account binding module 507 is configured to send the account information obtained by the account obtaining module 506 to the server, such that the server builds a binding relationship between the bound user account corresponding to the account information and the routing device after the server verifies the account information successfully.

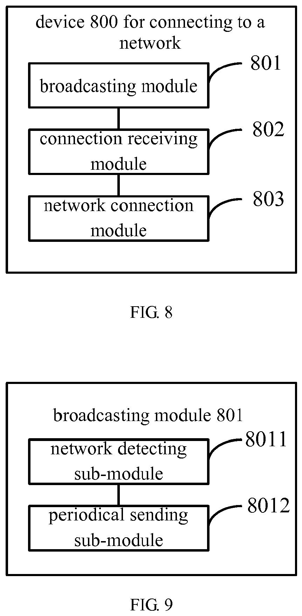

FIG. 8 shows a block diagram of another device for connecting to a network according to an example embodiment.

Referring to FIG. 8, the device 800 for connecting to a network may be applied in a smart device, including: a broadcasting module 801, a connection receiving module 802, and a network connection module 803.

The broadcasting module 801 is configured to broadcast device information of the smart device when the smart device is not connected to the network.

The connection receiving module 802 is configured to receive conncction information sent by a routing device.

The network connection module 803 is configured to connect to the network according to the connection information received by the connection receiving module 802.

The connection information is sent by the routing device after receiving a process result returned by a terminal device with regard to a network access request, in which the process result indicates that the network is allowed to be accessed, and the network access request is generated by the routing device and carries the device information.

In the above embodiments, the routing device may send the network access request carrying the device information to the terminal device after receiving the device information sent by the smart device when the smart device is not connected to the network, and send the connection information for accessing to the network to the smart device after receiving the result indicating that it is allowed to access the network returned by the terminal device, such that the smart device may access to the network; in the entire process, the user may perform a network connection confirmation on the smart device via the terminal device without operating the smart device, which may be realized conveniently with good maneuverability, meanwhile, a geographical restriction may be overcome, and a remote control on the network connection of the smart device may be realized.

FIG. 9 shows a block diagram of another device for connecting to a network according to an example embodiment.

Referring to FIG. 9, the embodiment is based on the embodiment shown in FIG. 8, and the broadcasting module 801 may include: a network detecting sub-module 8011 and a periodical sending sub-module 8012.

The network detecting sub-module 8011 is configured to detect whether the smart device is able to connect to the network after the smart device is started.

The periodical sending sub-module 8012 is configured to broadcast the device information of the smart device periodically under a condition that the network detecting sub-module 8011 detects that the smart device is unable to connect to the network.

In the above embodiments, the smart device may periodically broadcast the device information of the smart device when the smart device is not connected to the network, so as to obtain the connection information of the routing device and to access to the network; in the entire process, the user need not to operate the smart device, which may be realized conveniently, such that the user experience is good.

Concerning the realization process of functions and effects of each unit of the above device, reference may be made to the realization process of corresponding steps in the above method, which shall not be elaborated herein.

For the device embodiments, since the device embodiments are basically corresponding to the method embodiments, the related parts may refer to the description of the method embodiments. The above-described device embodiment is merely exemplary, the units described as separated parts may be or may not be physically separated, the components displayed as units may be or may not be physical units, i.e. may be located at one place, or may be distributed on multiple network elements. Parts or all the modules thereof may be selected according to actual requirements to implement of the object of the present invention, which can be understood and implemented by those skilled in the without any inventive effort.

Correspondingly, a device for connecting to a network is also provided in the present invention. The device includes: a processor; and a memory, configured to store instructions executable by the processor; in which, the processor is configured to: receive device information sent by a smart device, in which the device information is broadcasted by the smart device when the smart device is not connected to the network; generate a network access request carrying the device information; based on a bound user account, send the network access request to a terminal device on which the bound user account is logged in; receive a process result returned by the terminal device with regard to the network access request; and when the process result indicates that the network is allowed to be accessed, send connection information of the routing device to the smart device, such that the smart device connects to the network according to the connection information.

Correspondingly, a computer program and a non-temporary computer readable storage medium having stored thereon the computer program is also provided in the present invention, when the computer program is executed by a processor of a routing device, a method for connecting to a network can be executed by the routing device, and the method includes: receiving device information sent by a smart device, in which the device information is broadcasted by the smart device when the smart device is not connected to the network; generating a network access request carrying the device information; based on a bound user account, sending the network access request to a terminal device on which the bound user account is logged in; receiving a process result returned by the terminal device with regard to the network access request; and when the process result indicates that the network is allowed to be acccsscd, sending connection information of the routing device to the smart device, such that the smart device connects the network according to the connection information.

Correspondingly, a device for connecting to a network is also provided in the present invention. The device includes: a processor; and a memory, configured to store instructions executable by the processor; in which, the processor is configured to: when a smart device is not connected to the network, broadcast device information of the smart device; receive connection information sent by a routing device; and connect to the network according to the connection information; in which, the connection information is sent by the routing device after receiving a process result returned by a terminal device with regard to a network access request in which the process result indicates that the network is allowed to be accessed, and the network access request is generated by the routing device and carries the device information.

Correspondingly, a computer program and a non-temporary computer readable storage medium having stored thereon the computer program is also provided in the present invention, when the computer program is executed by a processor of a smart device, a method for connecting to a network can be executed by the smart device, and the method includes: when the smart device is not connected to the network, broadcasting device information of the smart device; receiving connection information sent by a routing device; and connecting to the network according to the connection information; in which, the connection information is sent by the routing device after receiving a process result returned by a terminal device with regard to a network access request, in which the process result indicates that the network is allowed to be accessed, and the network access request is generated by the routing device and carries the device information.

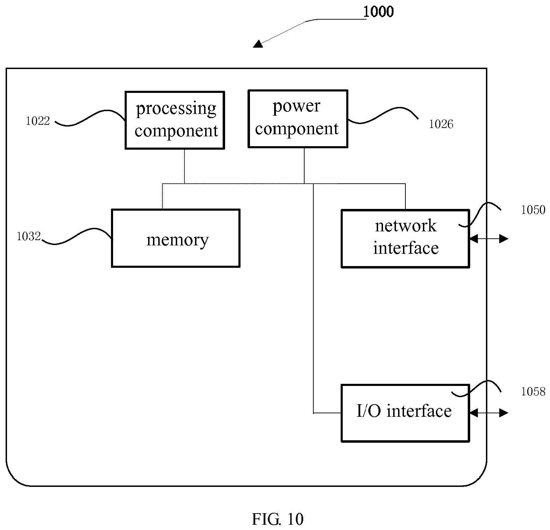

FIG. 10 shows a block diagram suitable for a device 1000 for connecting to a network according to an example embodiment. For example, the device 1000 may be provided as a server. Referring to FIG. 10, the device 1000 includes a processing component 1022, further including one or more processors, and memory resource represented by a memory 1032 which is configured to store instructions executed by the processing component 1022, e.g. an application program. The application program stored in the memory 1032 may include one or more modules each of which is corresponding to a series of instructions. In addition, the processing component 1022 is configured to execute instructions so as to execute the above method for connecting to a network.

The device 1000 may also include: a power component 1026 configured to execute the power management of the device 1000, a wired or wireless network interface 1050 configured to connect the device 1000 to the network, and an input/output (I/O) interface 1058. The device 1000 may operate based on an operation system stored in the memory 1032, e.g. a Windows Server TM, a Mac OS XTM, a UnixTM, a Linux TM, a FreeBSDTM or similar.

Other embodiments of the invention will be apparent to those skilled in the art from consideration of the specification and practice of the invention disclosed here.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A method for connecting to a network, applied in a routing device, comprising:
receiving (S301, S402) device information sent by a smart device, wherein the device information is broadcasted by the smart device when the smart device is not connected to the network;
generating (S302, S403) a network access request carrying the device information;
based on a bound user account, sending (S303, S404) the network access request to a terminal device on which the bound user account is logged in, the network access request comprising information for requesting a user of the terminal device to confirm the network access request,
receiving (S304) a process result made by the user from the terminal device with regard to the network access request; and
when the process result indicates that the network is allowed to be accessed, sending (S305, S407) the connection information of the routing device to the smart device, such that the smart device connects to the network according to the connection information via the routing device, wherein, based on a bound user account, sending (S303, S404) the network access request to a terminal device on which the bound user account is logged in, comprises:
sending account information of the bound user account and the network access request to a server, such that the server forwards the network access request to the terminal device on which the bound user account is logged in according to the account information.

2. The method according to claim 1, further comprising:
obtaining the account information inputted by a user; and
sending the account information to the server, such that the server builds a binding relationship between the bound user account corresponding to the account information and the routing device after the server verifies the account information successfully.

3. A device (500) for connecting to a network, applied in a routing device, comprising:
an information receiving module (501), configured to receive device information sent by a smart device, wherein the device information is broadcasted by the smart device when the smart device is not connected to the network;
a request generating module (502), configured to generate a network access request carrying the device information received by the information receiving module (501);
a request sending module (503), configured to send the network access request generated by the request generating module (502) to a terminal device on which a bound user account is logged in, based on the bound user account, the network access request comprising information for requesting a user of the terminal device to confirm the network access request;
a result receiving module (504), configured to receive a process result made by the user from the terminal device with regard to the network access request sent by the request sending module (503); and
a connection sending module (505), configured to send connection information of the routing device to the smart device under a condition that the process result received by the result receiving module (504) indicates that the network is allowed to be accessed, such that the smart device connects to the network according to the connection information via the routing device, wherein, the request sending module (503) comprises:
a first sending sub-module (5031), configured to send account information of the bound user account and the network access request to a server, such that the server forwards the network access request to the terminal device on which the bound user account is logged in according to the account information.

4. The device (500) according to claim 3, further comprising:
an account obtaining module (506), configured to obtain the account information inputted by a user; and
an account binding module (507), configured to send the account information obtained by the account obtaining module (506) to the server, such that the server builds a binding relationship between the bound user account corresponding to the account information and the routing device after the server verifies the account information successfully.

5. A computer program including instructions, when the instructions are executed by a processor of a routing device, performing a method according to any one of claims 1 to 2

6. A non-temporary computer readable storage medium having stored thereon a computer program according to claim 5.

## Patentansprüche

1. Verfahren zum Verbinden mit einem Netzwerk, das in einer Routervorrichtung angewendet wird, umfassend:
Empfangen (S301, S402) von Vorrichtungsinformationen, die von einer intelligenten Vorrichtung gesendet werden, wobei die Vorrichtungsinformationen von der intelligenten Vorrichtung ausgestrahlt werden, wenn die intelligente Vorrichtung nicht mit dem Netzwerk verbunden ist;
Erzeugen (S302, S403) einer Netzwerkzugriffsanfrage, die die Vorrichtungsinformation trägt;
basierend auf einem gebundenen Benutzerkonto, Senden (S303, S404) der Netzwerkzugriffsanfrage an ein Terminal bzw. Endgerät, an bzw. auf dem das gebundene Benutzerkonto angemeldet ist, wobei die Netzwerkzugriffsanfrage Informationen zur Anfrage eines Benutzers des Endgeräts umfasst, um die Netzwerkzugriffsanfrage zu bestätigen,
Empfangen (S304) eines Prozessergebnisses, das der Benutzer des Endgerätes in Bezug auf die Netzwerkzugriffsanfrage erzeugt bzw. gemacht hat; und
wenn das Prozessergebnis anzeigt, dass auf das Netzwerk zugegriffen werden darf, Senden (S305, S407) der Verbindungsinformation der Routervorrichtung an die intelligente Vorrichtung, so dass sich die intelligente Vorrichtung gemäß der Verbindungsinformation über die Routervorrichtung mit dem Netzwerk verbindet, wobei, basierend auf einem gebundenen Benutzerkonto, das Senden (S303, S404) der Netzwerkzugriffsanfrage an ein Endgerät, an bzw. auf dem das gebundene Benutzerkonto angemeldet ist, umfasst:
Senden von Kontoinformationen des gebundenen Benutzerkontos und der Netzwerkzugriffsanfrage an einen Server, so dass der Server die Netzwerkzugriffsanfrage an das Endgerät, an bzw. auf dem das gebundene Benutzerkonto angemeldet ist, gemäß den Kontoinformationen weiterleitet.

2. Verfahren nach Anspruch 1, weiter umfassend:
Erhalten der von einem Benutzer eingegebenen Kontoinformation; und
Senden der Kontoinformation an den Server, so dass der Server eine verbindende bzw. bindende Beziehung zwischen dem gebundenen Benutzerkonto, das der Kontoinformation entspricht, und der Routervorrichtung aufbaut, nachdem der Server die Kontoinformation erfolgreich verifiziert hat.

3. Vorrichtung (500) zum Verbinden mit einem Netzwerk, die in einer Routervorrichtung angewendet wird, umfassend:
ein Informationsempfangsmodul (501), das so eingerichtet ist, dass es Vorrichtungsinformationen empfängt, die von einer intelligenten Vorrichtung gesendet werden, wobei die Vorrichtungsinformationen von der intelligenten Vorrichtung ausgestrahlt werden, wenn die intelligente Vorrichtung nicht mit dem Netzwerk verbunden ist;
ein Anfrageerzeugungsmodul (502), das so eingerichtet ist, dass es eine Netzwerkzugriffsanfrage erzeugt, die die von dem Informationsempfangsmodul (501) empfangenen Vorrichtungsinformationen trägt;
ein Anfragesendemodul (503), das so eingerichtet ist, dass es die von dem Anfragerzeugungsmodul (502) erzeugte Netzwerkzugriffsanfrage an ein Endgerät sendet, an bzw. auf dem ein gebundenes Benutzerkonto angemeldet ist, basierend auf dem gebundenen Benutzerkonto, wobei die Netzwerkzugriffsanfrage Informationen zur Anfrage eines Benutzers des Endgeräts umfasst, um die Netzwerkzugriffsanfrage zu bestätigen;
ein Ergebnisempfangsmodul (504), das so eingerichtet ist, dass es ein Prozessergebnis empfängt, das von dem Benutzer des Endgeräts in Bezug auf die von dem Anfragesendemodul (503) gesendete Netzwerkzugriffsanfrage erzeugt wurde; und
ein Verbindungssendemodul (505), das so eingerichtet ist, dass es Verbindungsinformationen der Routervorrichtung an die intelligente Vorrichtung unter der Bedingung sendet, dass das durch das Ergebnisempfangsmodul (504) empfangene Prozessergebnis anzeigt, dass der Zugriff auf das Netzwerk erlaubt ist, so dass die intelligente Vorrichtung sich gemäß den Verbindungsinformationen über die Routervorrichtung mit dem Netzwerk verbindet, wobei das Anfragesendemodul (503) umfasst:
ein erstes Sendeuntermodul (5031), das so eingerichtet ist, dass es Kontoinformationen des gebundenen Benutzerkontos und die Netzwerkzugriffsanfrage an einen Server sendet, so dass der Server die Netzwerkzugriffsanfrage an das Endgerät weiterleitet, an bzw. auf dem das gebundene Benutzerkonto gemäß den Kontoinformationen angemeldet ist.

4. Vorrichtung (500) nach Anspruch 3, ferner umfassend:
ein Kontoerhaltemodul (506), das so eingerichtet ist, dass es die von einem Benutzer eingegebene Kontoinformation erhält; und
ein Kontobindemodul (507), das so eingerichtet ist, dass es die durch das Kontoerhaltemodul (506) erhaltene Kontoinformation an den Server sendet, so dass der Server eine bindende bzw. verbindende Beziehung zwischen dem gebundenen Benutzerkonto, das der Kontoinformation entspricht, und der Routervorrichtung aufbaut, nachdem der Server die Kontoinformation erfolgreich verifiziert hat.

5. Computerprogramm mit Befehlen, das, wenn die Befehle von einem Prozessor einer Routervorrichtung ausgeführt werden, ein Verfahren nach einem der Ansprüche 1 bis 2 ausführt

6. Nicht temporäres bzw. flüchtiges computerlesbares Speichermedium, auf dem ein Computerprogramm nach Anspruch 5 gespeichert ist.

## Revendications

1. Procédé de connexion à un réseau, appliqué dans un dispositif de routage, comportant les étapes consistant à :
recevoir (S301, S402) des informations de dispositif envoyées par un dispositif intelligent, dans lequel les informations de dispositif sont diffusées par le dispositif intelligent lorsque le dispositif intelligent n'est pas connecté au réseau ;
générer (S302, S403) une requête d'accès au réseau transportant les informations de dispositif ;
sur la base d'un compte d'utilisateur lié, envoyer (S303, S404) la requête d'accès au réseau à un dispositif terminal sur lequel une session du compte d'utilisateur lié est ouverte, la requête d'accès au réseau comportant des informations destinées à demander à un utilisateur du dispositif terminal de confirmer la requête d'accès au réseau,
recevoir (S304) un résultat de processus obtenu par l'utilisateur à partir du dispositif terminal concernant la requête d'accès au réseau ; et
lorsque le résultat de processus indique que le réseau est autorisé à faire l'objet d'un accès, envoyer (S305, S407) les informations de connexion du dispositif de routage au dispositif intelligent, de telle sorte que le dispositif intelligent se connecte au réseau en fonction des informations de connexion via le dispositif de routage, dans lequel, sur la base d'un compte d'utilisateur lié, l'envoi (S303, S404) de la requête d'accès au réseau à un dispositif terminal sur lequel une session du compte d'utilisateur lié est ouverte, comporte l'étape consistant à :
envoyer des informations de compte du compte d'utilisateur lié et la requête d'accès au réseau à un serveur, de telle sorte que le serveur transfère la requête d'accès au réseau au dispositif terminal sur lequel une session du compte d'utilisateur lié est ouverte en fonction des informations de compte.

2. Procédé selon la revendication 1, comportant en outre les étapes consistant à :
obtenir les informations de compte entrées par un utilisateur ; et
envoyer les informations de compte au serveur, de telle sorte que le serveur établit une relation de liaison entre le compte d'utilisateur lié correspondant aux informations de compte et le dispositif de routage après que le serveur a vérifié les informations de compte avec succès.

3. Dispositif (500) de connexion à un réseau, appliqué dans un dispositif de routage, comportant :
un module de réception d'informations (501), configuré pour recevoir des informations de dispositif envoyées par un dispositif intelligent, dans lequel les informations de dispositif sont diffusées par le dispositif intelligent lorsque le dispositif intelligent n'est pas connecté au réseau ;
un module de génération de requête (502), configuré pour générer une requête d'accès au réseau transportant les informations de dispositif reçues par le module de réception d'informations (501) ;
un module d'envoi de requête (503), configuré pour envoyer la requête d'accès au réseau générée par le module de génération de requête (502) à un dispositif terminal sur lequel une session du compte d'utilisateur lié est ouverte, sur la base du compte d'utilisateur lié, la requête d'accès au réseau comportant des informations pour demander à un utilisateur du dispositif terminal de confirmer la requête d'accès au réseau ;
un module de réception de résultat (504), configuré pour recevoir un résultat de processus obtenu par l'utilisateur à partir du dispositif terminal en ce qui concerne la requête d'accès au réseau envoyée par le module d'envoi de requête (503) ; et
un module d'envoi de connexion (505), configuré pour envoyer des informations de connexion du dispositif de routage au dispositif intelligent à condition que le résultat de processus reçu par le module de réception de résultat (504) indique que le réseau est autorisé à faire l'objet d'un accès, de telle sorte que le dispositif intelligent se connecte au réseau en fonction des informations de connexion via le dispositif de routage, dans lequel le module d'envoi de requête (503) comporte :
un premier sous-module d'envoi (5031), configuré pour envoyer des informations de compte du compte d'utilisateur lié et la requête d'accès au réseau à un serveur, de telle sorte que le serveur transfère la requête d'accès au réseau au dispositif terminal sur lequel une session du compte d'utilisateur lié est ouverte en fonction des informations de compte.

4. Dispositif (500) selon la revendication 3, comportant en outre :
un module d'obtention de compte (506), configuré pour obtenir les informations de compte entrées par un utilisateur ; et
un module de rattachement de compte (507), configuré pour envoyer les informations de compte obtenues par le module d'obtention de compte (506) au serveur, de telle sorte que le serveur établit une relation de liaison entre le compte d'utilisateur lié correspondant aux informations de compte et le dispositif de routage après que le serveur a vérifié les informations de compte avec succès.

5. Programme informatique incluant des instructions mettant en œuvre, lorsque les instructions sont exécutées par un processeur d'un dispositif de routage, un procédé selon l'une quelconque des revendications 1 à 2.

6. Support de stockage non temporaire lisible par ordinateur ayant un programme informatique selon la revendication 5 stocké sur celui-ci.
